# EUROPEAN PATENT APPLICATION

(11) **EP 4 556 594 A1**
(43) Date of publication of application: **21.05.2025**
(21) Application number: 23210233.5
(22) Date of filing: 16.11.2023
(51) Int. Cl.: C25B 1/04, C25B 15/00, C25B 15/02, C25B 15/08, F03D 9/19

(54) **WIND-POWERED ELECTROLYSIS ARRANGEMENT**

(71) Applicant: Siemens Gamesa Renewable Energy A/S, 7330 Brande (DK)
(72) Inventor: Hellstern, Henrik Christian Lund, 8210 Aarhus V (DK); Eggers, Jan Rudolf, 21640 Bliedersdorf (DE); von der Heyde, Michael, 22926 Ahrensburg (DE)
(74) Representative: SGRE-Association

(57) **Abstract**

The invention describes a wind-powered electrolysis arrangement (1) comprising a plurality of wind turbines (100) of an offshore wind park (10); a distributed electrolyser plant (11) comprising a plurality of electrolysers (110), wherein each electrolyser (110) is arranged on a wind turbine platform (100P); a balance of plant (11BoP) of the distributed electrolyser plant (11), installed on a main platform (10P) in the wind park (10); and a plurality of product pipelines (12), wherein each product pipeline (12) is arranged to convey a number of products (20, 21, 22, 23, 24, 25) between the balance of plant (11BoP) and a distributed electrolyser (110). The invention further describes a method of operating such a wind-powered electrolysis arrangement (1) .

## Description

### Background

A water electrolysis plant can be used to generate hydrogen gas (H₂) from a water supply such as seawater. The hydrogen produced by a large-scale water electrolysis plant can be used for various purposes, for example as fuel for vehicles, to manufacture ammonia, etc. A water electrolysis plant can comprise a stack of electrolyser cells, for example PEM (proton-exchange membrane) electrolyser cells, alkaline water electrolyser cells, etc. In addition, the water electrolysis plant requires various other components, collectively referred to as the "balance of plant". A PEM electrolyser plant requires a purified water supply system for desalination of seawater as well as various other systems such as a nitrogen supply, an instrument air supply, a compressor, etc. An alkaline electrolyser requires an alkaline solution of water and suitable electrolytes such as potassium hydroxide (KOH), sodium hydroxide (NaOH), etc.

Offshore wind farms (also called wind parks) are being used to provide power for large-scale water electrolysis plants. For example, power cables from an offshore wind farm can transport electricity to a large-scale electrolysis plant on the mainland. A disadvantage of this approach is the high cost of bringing the electricity to the electrolysis plant. Another disadvantage is the considerable power losses in the export power cables, further reducing the overall efficiency.

Alternatively, a large-scale electrolysis plant (the electrolyser cells and the balance of plant) can be installed on a suitably large offshore platform, within or close to the wind farm. In such a scenario, power from the wind turbines can be transported to a centrally located transformer at the electrolyser platform, for example. The export hydrogen can be transported to the mainland through a pipeline. A problem with this approach is the high cost of constructing such a large offshore platform. In this case also, power losses are incurred in transporting electrical power from the wind turbines distributed throughout the wind farm.

In another approach, electrolysis can be distributed over the wind turbines of the wind farm by connecting each wind turbine to its own "small-scale" electrolysis plant. In such a system, an electrolyser and its balance of plant is installed directly at a wind turbine, for example on a platform at the base of the wind turbine tower. In this type of configuration, each electrolyser must be equipped with a desalination unit, a backup power supply, an instrument air supply, a nitrogen supply, a hydrogen compressor, etc. In addition to the costs of providing a large number of such scaled-down electrolysis plants (for example one electrolysis plant for each of many wind turbines of the wind farm), a disadvantage of this distributed approach is that the number of components requiring service and repair is increased, since technicians will be required to visit each wind turbine of the wind farm in order to perform maintenance on each electrolyser's balance of plant. Furthermore, it is necessary to collect the export hydrogen from each wind turbine installation for pipeline transport to the mainland, and this may require multiple compressor stages to be installed throughout the wind park.

It is therefore an object of the invention to provide an offshore wind-powered electrolysis plant that overcomes the problems outlined above.

This object is achieved by the claimed wind-powered electrolysis arrangement and by the claimed method of operating such a wind-powered electrolysis arrangement.

### Description

Since large wind parks have been primarily located offshore, in the following it may be assumed that the inventive wind-powered electrolysis arrangement is realized in an offshore wind park. However, it shall be understood that the inventive wind-powered electrolysis arrangement can equally be deployed using an onshore wind park.

The supporting structure of an offshore wind turbine can be a monopile, a tripod, a jacket structure etc., carried by a foundation that is fixed to the seabed. Equally, the supporting structure of an offshore wind turbine can be a floating foundation. Generally, to facilitate access to an offshore wind turbine, the supporting structure also carries a platform, mounted for example on a transition piece between the support structure and the wind turbine, as will be familiar to the skilled person.

According to the invention, the wind-powered electrolysis arrangement comprises a plurality of wind turbines of an offshore wind park, and a distributed electrolyser plant comprising a plurality of electrolysers. Each electrolyser is attached in some way to the supporting structure of its wind turbine, for example an electrolyser can be mounted on the type of platform described above. An arrangement comprising an electrolyser and a wind turbine, as well as any structure(s) required to support the wind turbine and the electrolyser, is referred to in the following as a "decentralized offshore hydrogen plant", "decentralized onshore hydrogen plant", or simply "DOHP". As indicated above, there are various types of water electrolysers. Since PEM water electrolysers and alkaline water electrolysers are particularly suited for wind-powered electrolysis plants, these may be mentioned in the context of exemplary configurations in the following. However, it shall be understood that the invention is equally applicable to other types of water electrolysis.

The balance of plant of the distributed electrolyser plant is installed on a main platform arrangement of the wind park. The main platform arrangement can comprise one or more large platforms, preferably arranged centrally in the wind farm. The inventive wind-powered electrolysis arrangement further comprises a plurality of product exchange pipelines arranged to convey products between the balance of plant, the electrolysers and their respective wind turbines.

A distributed electrolyser plant can comprise as many electrolysers as there are wind turbines in the wind farm. Equally, two or more distributed electrolyser plants can avail of the wind turbines of a wind farm. Of course, not all wind turbines of a wind farm need to be dedicated to the distributed electrolyser plant(s).

A wind park can comprise any number of wind turbines, for example several tens of wind turbines. These are generally arranged at regular intervals. It follows that the inventive wind-powered electrolysis arrangement can comprise the same number of DOHPs. Equally, the inventive wind-powered electrolysis arrangement can comprise a plurality of decentralized offshore hydrogen plants as well as a number of wind turbines that are used to generate electricity for export to a utility grid.

An advantage of the inventive configuration is that each electrolyser is placed as close as possible to its source of power (the respective wind turbine), so that fewer transformation steps are required, leading to significantly reduced power losses, reduced system complexity and reduced capital expenditure (CAPEX). In the inventive wind-powered electrolysis arrangement, therefore, the efficiency of hydrogen production is increased. Equally, provision of the products necessary for water electrolysis (e.g. purified water, nitrogen, etc. for a PEM water electrolyser or an aqueous alkaline solution for an alkaline water electrolyser, etc.) is "outsourced" to a common balance of plant, installed on the main platform, which carries all units and modules necessary for the provision of these products.

According to the invention, the method of operating a wind-powered electrolysis arrangement comprises the steps of providing a wind park comprising a plurality of wind turbines; arranging each of a plurality of electrolysers of a distributed electrolyser plant on a respective wind turbine platform; connecting the output power of each wind turbine to its electrolyser; installing the balance of plant of the distributed electrolyser plant on a main platform of the wind park; and exchanging products between the balance of plant and each of the distributed electrolysers.

Particularly advantageous embodiments and features of the invention are given by the dependent claims, as revealed in the following description. Features of different claim categories may be combined as appropriate to give further embodiments not described herein.

The balance of plant for the distributed electrolysers - i.e. various installations necessary for running the distributed electrolysers - is placed on the (permanently or intermittently manned) main platform arrangement, which is preferably located centrally in the wind park, or at any location that permits an optimal arrangement of product exchange pipelines, i.e. an arrangement in which pipeline lengths are favourably short. The main platform arrangement can also carry various installations necessary for controlling the wind turbines. The main platform arrangement can comprise a single platform large enough to carry the balance of plant for the DOHPs. Equally, the main platform arrangement can comprise two or more platforms, which can be located in proximity to each other or which can be distributed throughout the wind farm, as appropriate.

The offshore wind park can be located at a significant distance from the mainland. For example, if its wind turbines are carried by floating foundations, a wind farm can be located several hundred kilometres offshore. An advantage of the inventive configuration is that only an export hydrogen pipeline is required to transport the hydrogen to an onshore facility. The electricity generated by the wind park is consumed by the electrolyser plant, and all products required for electrolysis are generated locally at the balance of plant.

Each product exchange pipeline conveys various products between the balance of plant and a DOHP. Since such a pipeline connects a DOHP with the centrally located balance of plant, it may be referred to herein as an "umbilical pipeline" or simply "umbilical". An umbilical can be a conventional marine pipeline, made of a material such as HDPE, and is preferably armoured to avoid damage. Depending on the wind park location, water depth, water currents etc., an umbilical may be laid on the seabed and/or may be partially buried under the seabed. Equally, an umbilical may to some extent be allowed to float.

As indicated above, the wind-powered electrolysis plant can deploy PEM water electrolysers. Since PEM water electrolysis requires pure water, each umbilical encloses a purified water pipe which conveys purified water from the balance of plant to the respective electrolyser. Each umbilical further encloses a hydrogen pipe for conveying gaseous hydrogen from the respective electrolyser to the balance of plant. In the inventive electrolyser system, the purified water is conveyed from the balance of plant to each electrolyser, and the hydrogen from that electrolyser is conveyed in the opposite direction, back towards the balance of plant. Therefore, each umbilical encloses a fluid pipeline for conveying purified water in the direction of an electrolysers, and another fluid pipeline for conveying hydrogen in the direction of the balance of plant.

An umbilical can enclose any number of further pipes, each carrying a specific product, for example: a nitrogen pipe for conveying nitrogen gas from the balance of plant to the respective electrolyser, an instrument air pipe for conveying instrument air from the balance of plant to the respective electrolyser.

Since the electrolysers require pure water, the balance of plant preferably comprises a water purifier system built at a scale sufficient to provide purified water to all DOHPs. Purification can commence with a desalination stage to remove salt ions from the seawater and can comprise various other stages to remove contaminants from the water. To ensure efficient electrolysis and to avoid damage to an electrolyser, it is usual to perform electrodialysis or ion exchange in order to obtain ultra-pure water. However, ultra-pure water is difficult to store for any length of time, since ions or molecules from the inner surfaces of any enclosing vessel or pipeline, or from gases in contact with the water surface, transfer readily into the purified water. Such impurities can detract from the efficiency of the electrolyser and can also result in damage. Therefore, in a particularly preferred embodiment of the invention, each DOHP is equipped with a water polishing unit for its electrolyser. Performing this final "polishing" step at the DOHP ensures that the ultra-pure water cannot deteriorate, while avoiding the high costs associated with storage of ultra-pure water.

The balance of plant further comprises a nitrogen supply in order to supply gaseous nitrogen to the DOHPs, since a DOHP may need to purge its hydrogen system at some stage. For example, this can be necessary when the DOHP becomes operational for the first time, or after any electrolyser downtime. The nitrogen supply can be an air separator, for example, or any suitable type of supply.

The balance of plant can further comprise an instrument air supply, for example an installation for generating compressed air that is conveyed in the umbilicals to the DOHPs. A DOHP can, for example, require compressed air to operate pneumatic valves in a fluid circuit of the electrolyser. Compressed air can also be needed by other equipment of a DOHP, for example pressurized air can be fed into an electrical cabinet to avoid an undesirable accumulation of gaseous hydrogen (and development of an explosive atmosphere) inside the cabinet.

Each DOHP produces H₂ gas which is conveyed to the main platform via a hydrogen pipeline in the respective umbilical(s). The balance of plant can be configured to collect the hydrogen delivered by the DOHPs and to perform any compression required. A platform of the electrolysis arrangement can be equipped with a hydrogen offtake interface from which the compressed hydrogen can be exported.

In an alternative configuration, the wind-powered electrolysis plant can deploy alkaline water electrolysers. In this case, each umbilical encloses a pipe which conveys an alkaline electrolyte solution (e.g. purified water and KOH; purified water and NaOH, etc.) from the balance of plant to the respective electrolyser. Each umbilical further encloses a pipe for conveying the alkaline electrolyte solution, now also containing H2 gas, from the respective electrolyser to the balance of plant. Again, these pipes convey their fluid contents in opposite directions.

In this case also, an umbilical can enclose any number of further pipes, each carrying a specific product, for example: a nitrogen pipe for conveying nitrogen gas from the balance of plant to the respective electrolyser, an instrument air pipe for conveying instrument air from the balance of plant to the respective electrolyser.

Since the alkaline electrolyte solution should be prepared from pure water, the balance of plant in this case also preferably comprises a water purifier system and an electrolyte preparation system which adds suitable quantities of the chosen electrolyte(s) to the purified water.

Each DOHP produces H₂ gas which remains in the liquid electrolyte and is returned to the balance of plant. This preferably comprises a suitably-scaled separator for extracting the hydrogen from the liquid electrolyte. Further processing units may comprise a scrubber, a deoxygenator for removing molecular oxygen (O₂) from the return electrolyte, a drier for removing moisture from the separated hydrogen, etc. Here also, the balance of plant can be configured to collect the hydrogen delivered by the DOHPs in this was, and to perform any compression required prior to feeding the hydrogen to an hydrogen offtake interface from which the compressed hydrogen can be exported.

The hydrogen offtake interface may be connected to a subsea hydrogen pipeline connected for example to an onshore facility or to a larger backbone pipeline. Equally, a subsea hydrogen pipeline can connect two or more platforms of the electrolysis arrangement to form a network with a central export pipeline to shore, to a central offtake interface or to a connection point to a backbone pipeline.

An offtake interface can for example facilitate transfer of the export hydrogen to a hydrogen carrier vessel. Such an offtake interface can be provided at a main platform of the electrolysis arrangement, or at a suitably positioned mooring point (for example at an outer edge of the wind farm) at which a hydrogen carrier vessel can safely moor during a loading procedure.

Preferably, a plant controller is installed on the main platform. The plant controller can be configured to control the electrolysis arrangement (i.e. the various components of the balance of plant and the distributed electrolysers). The plant controller may also be configured to control the wind turbines of the wind park. Each umbilical further encloses a data cable for exchanging data between the respective DOHP and the park controller. The park controller can monitor various aspects of the balance of plant and the distributed electrolysers and can respond as appropriate. For example, the park controller of a PEM water electrolysis plant can monitor the level of buffered polished water stored locally at each DOHP. As the level of buffered polished water approaches a lower threshold, the park controller commands the water purifier system to send purified water to the respective DOHP.

The plant controller can also be configured to optimize the operation of the plant in various other exemplary situations. For example, the active DOHPs can inform the park controller of their current electrolyzer load and/or available electrical power, and the plant controller can distribute the available electrical power in a balanced manner among the DOHPs to balance the load level of the individual electrolysers. In another example, multiple DOHPs may be in idle mode, and the plant controller can schedule an optimized sequential startup procedure based on the available power or system state of those DOHPs.

In low wind conditions, the plant controller can be configured to concentrate the available electrical energy on a subset of the electrolysers, i.e. in some DOHPs the electrolysers remain inactive and the wind turbines send electricity to the main platform for routing to the DOHPs with active electrolysers. In this way, the number of electrolyzer startup procedures is kept to a minimum.

Equally, each DOHP of a PEM water electrolysis plant can send status information to the plant controller, for example to report on the quality of the purified water received at its polishing system, to report an excessively high level of hydrogen humidity, etc. On the basis of information received from one or more DOHPs, the plant controller can issue suitable commands. For example, commands can be issued to the water purification system to improve the water quality; commands can be issued to a relevant devices to remove humidity from the hydrogen prior to export.

In a further exemplary scenario, the plant controller may respond to limited availability of the hydrogen offtake interface (owing to full buffer storage in case of transport by carrier vessel; excessive pipeline pressure; maintenance work; pipeline damage etc.) by commanding some or all of the DOHPs to shut down their respective electrolysers.

The plant controller may also be equipped with a meteorological station configured to determine at least a short-term weather forecast, and can control the DOHPs accordingly. For example, if wind speed is predicted to drop below the cut-in speed of a wind turbine but only for a short duration, the plant controller commands the respective DOHP to not shut down its electrolyzer, and provides that DOHP with the required power until the wind turbine can resume operation. Equally, if wind speed is predicted to increase above the cut-in speed but only for a short duration, the plant controller commands the respective DOHP to not initiate startup of its electrolyzer.

An umbilical further encloses a power cable for exchanging electrical energy between the respective DOHP and an electrical installation on the main platform, for example an energy storage device, a small energy buffer, an electrical interface directly connecting the individual DOHPs, etc. In this way, the electrolyser of the respective DOHP can be powered using electrical energy generated by other wind turbines of the wind park, for example if the wind turbine of that DOHP is unable to generate electricity, but the wind park as a whole is generating sufficient power to cover the deficit.

In a preferred embodiment of the invention, the balance of plant further comprises a backup power supply configured to provide backup power to auxiliaries of the wind turbines. Such backup power may be required during times of low wind, for example. The backup power supply can comprise any of a fuel cell, a battery, a gas motor, a heat engine, a redox flow battery, a supercapacitor, a flywheel, etc.

In a particularly preferred embodiment of the invention, the electrolyser of a downstream wind turbine can be operated using electrical energy generated by upstream wind turbines. In such an embodiment, the wind park controller issues commands and references as appropriate to direct electrical energy from one or more upstream wind turbines (i.e. wind turbines most exposed to the incoming wind) to the electrolysers of downstream turbines. In this way, essentially the same load level can be achieved for all electrolysers of the distributed electrolysis plant.

In low wind situations or for other reasons, some or all of the wind turbines may be shut down. Each wind turbine could be equipped with its own backup power supply. In an alternative approach, the wind park can deploy a large-capacity backup power supply that is capable of restarting multiple wind turbines. In each case, the costs of providing and maintaining the backup power supply (e.g. a diesel generator, a battery, etc.) are high. In the inventive wind-powered electrolysis arrangement, re-starting wind turbines is done in a more efficient manner, avoiding the need to provide one or more large backup power supplies for the entire wind farm or many backup power supplies for the individual wind turbines. Instead, the inventive method comprises a step of initiating startup of a first wind turbine using electricity generated by other wind turbines of the wind park.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an embodiment of the inventive wind-powered electrolysis arrangement;
Figure 2 is a simplified cross-section through an umbilical pipe in a first embodiment of the inventive wind-powered electrolysis arrangement;
Figure 3 shows a schematic perspective view of an embodiment of the inventive wind-powered electrolysis arrangement;
Figure 4 is a simplified representation view of a further embodiment of the inventive wind-powered electrolysis arrangement;
Figure 5 is a simplified cross-section through an umbilical pipe for the wind-powered electrolysis arrangement of Figure 4;
Figures 6 - 8 show prior art wind-powered electrolysis arrangements.

In the diagrams, like numbers refer to like objects throughout. Objects in the diagrams are not necessarily drawn to scale.

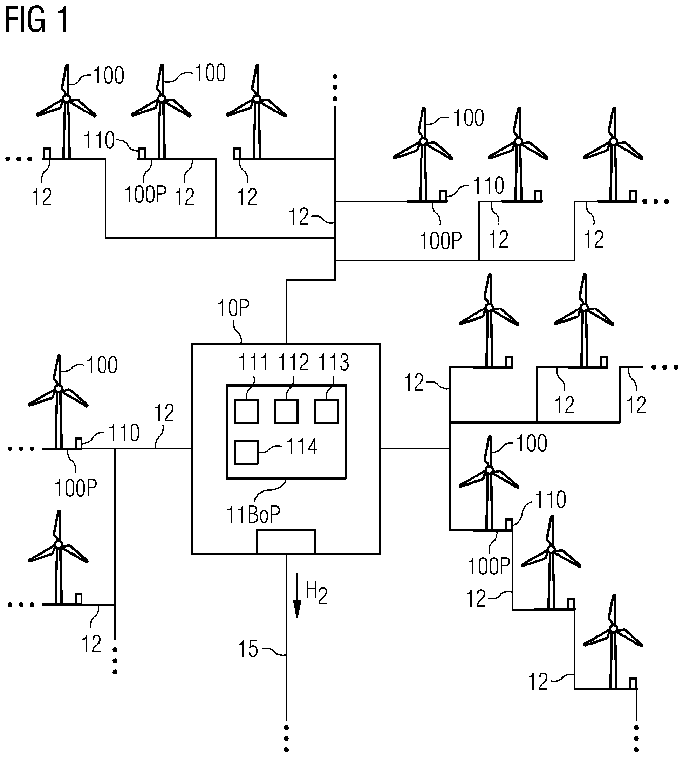

Figure 1 shows an embodiment of the inventive wind-powered electrolysis arrangement 1, in which the wind turbines 100 of an offshore wind park 10 generate electricity to drive PEM water electrolysers 110 of a distributed large-scale electrolyser plant 11. The balance of plant 11BoP for the electrolyser plant 11 is installed on a main platform 10P which can be provided centrally or at any convenient location in the wind farm 10WP. Of course, depending on factors such as the size of the wind farm and the number of electrolysers in the distributed electrolyser plant, one or more additional main platforms can be provided at suitable locations. Any main platform can be fully automated, intermittently manned or permanently manned.

In this exemplary embodiment, a single main platform is shown. The balance of plant 11BoP comprises a water purifier system 111, a backup power supply 112, a nitrogen supply 113, an instrument air supply 114, a hydrogen offtake interface 115. A plurality of umbilical pipelines 12 is provided, each connecting a wind turbine 10 to the main platform 104. Each umbilical 12 comprises an outer pipe 129 enclosing multiple inner pipes, cables, etc.

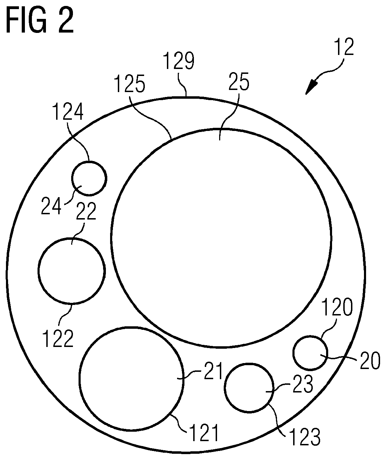

Figure 2 is a simplified cross-section through an exemplary umbilical 12 for the plant of Figure 1, showing the arrangement of inner pipes 121, 123, 124, 125 and cables 120, 122 in its interior. Here, the outer pipe 129 of the umbilical 12 encloses a hydrogen pipe 125, a nitrogen pipe 123, an instrument air pipe 124, a purified water pipe 121, a data cable 120, and an electricity cable 122. The outer pipe 129 of an umbilical 12 can be made of HDPE, for example and can be laid on the seabed. The outer pipe 129 can be armoured, as will be known to the skilled person, to protect against damage. Equally, the outer pipe 129 can be weighted so that the umbilical 12 will rest on the seabed. Depending on the fluid that it will convey, an inner pipe 121, 123, 124, 125 can be made of a metal (stainless steel, a chrome-based alloy, a nickel-based alloy, titanium, aluminium etc.), a synthetic material such as polyethylene (for example HDPE), a composite material, etc. The space between the inner pipes and cables can be filled with a suitable material such as a thermoplastic, a foam, etc.

Any such umbilical 12 can be pre-assembled in a factory by arranging suitable lengths of the required inner pipes and cables in the interior of a suitably long outer pipe 129, so that the completed umbilical 12 can be installed between two points of the inventive wind-powered electrolysis arrangement 1 in a single favourably straightforward operation that is significantly less complex than having to insert inner pipes and cables into a previously installed outer pipe. In the exemplary embodiment shown in Figure 1, a single water purifier system 111 can supply purified water 21 to each of the electrolysers 110; a single backup power supply 112 can provide electrical energy 22 to each of the electrolysers 110; a single nitrogen supply 113 can supply nitrogen 23 to each of the electrolysers 110; a single instrument air supply 114 can supply compressed air 24 to each of the electrolysers 110.

The hydrogen 25 generated at each electrolyser 110 is transported to the main platform 10P, where the hydrogen offtake interface 115 compresses the hydrogen for export by pipeline 15 to an onshore landfall facility, to a larger "backbone" export pipeline, to a fuelling facility for transfer to a hydrogen carrier, etc.

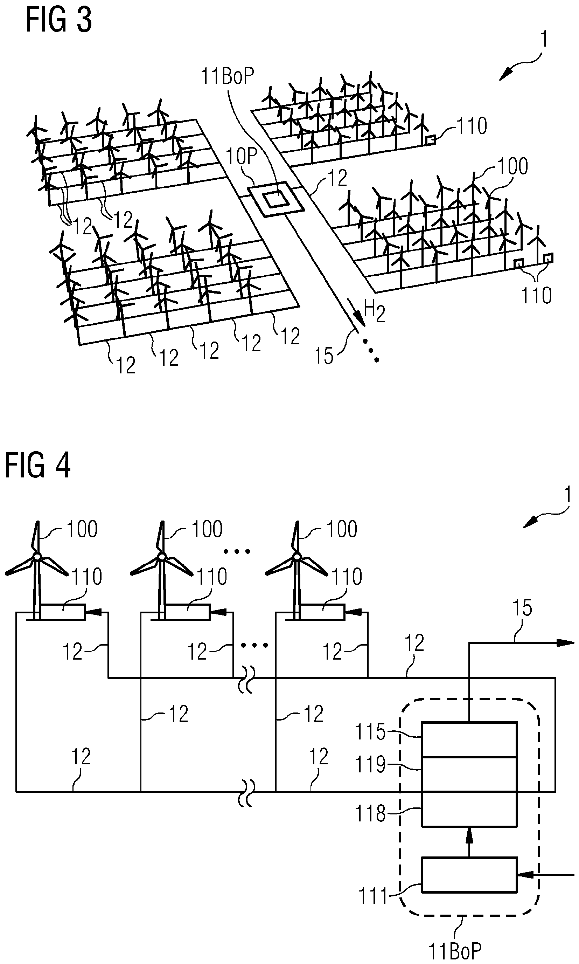

Maintenance and repair procedures to the balance of plant 11BoP is straightforward, since the single water purifier system 111, single backup power supply 112, single nitrogen supply 113, single instrument air supply 114 and single hydrogen offtake interface 115 are all located on the easily accessible main platform 10P. This can be constructed to facilitate mooring of one or more supply vessels, for example. Equally, the main platform 10P can have a helicopter landing zone. Even in a configuration that uses more than one main platform, maintenance and repair procedures to the balance of plant 11 BoP are still favourably straightforward, since the number of components requiring service is still very low. Figure 3 shows a schematic perspective view of the inventive wind-powered electrolysis arrangement 1, showing the wind turbines 100 of the wind park 10 and a centrally placed main platform 10P and the installed balance of plant 11BoP described above. The diagram also indicates an exemplary arrangement of umbilical pipes 12 connecting the distributed electrolysers 110 with the balance of plant 11BoP on the main platform 10P.

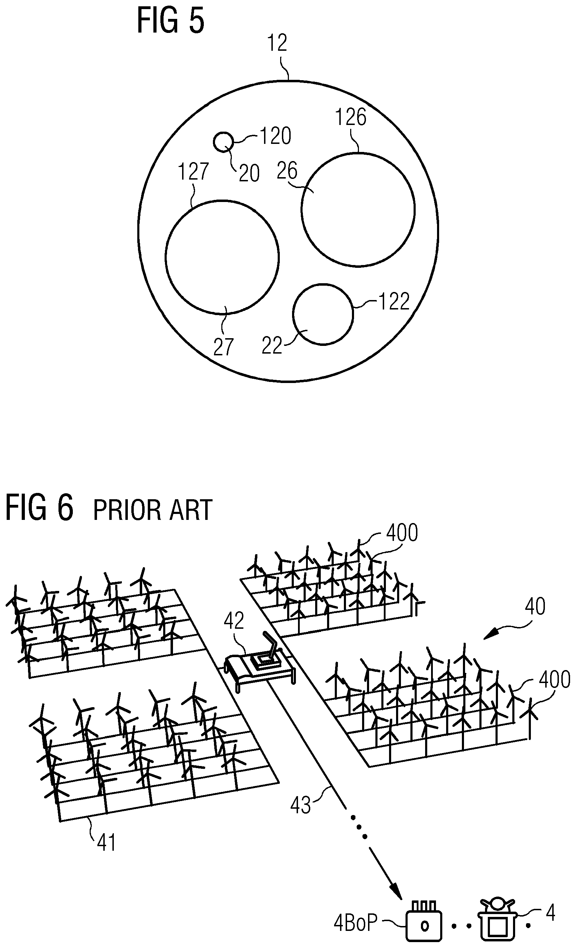

Figure 4 shows a further embodiment of the inventive wind-powered electrolysis arrangement 1. Here, each DOHP of the distributed electrolysis plant comprises alkaline electrolysers 110. In addition to a water purifier 111 (which may use ground water, sea water etc. and which may comprise any number of sub-systems necessary for providing purified water at its outlet), the balance of plant 11BoP is equipped with a electrolyte mixer 118 which mixes a suitable quantity of an electrolyte with the purified water. The aqueous alkaline mixture is then piped to each electrolyser 110, and a hydrogen-enriched alkaline mixture is returned by pipeline to the balance of plant 11BoP. Figure 5 is a simplified cross-section through an umbilical 12, showing a basic configuration of four pipes, in this case an outgoing electrolyte pipe 126 (conveying a fluid 26 comprising purified water and an alkali), a return electrolyte pipe 127 (conveying a fluid 27 comprising the alkaline mixture as well as dissolved hydrogen gas); and a data cable 120 and an electricity cable 122 for the wind turbine of each DOHP. At the balance of plant 11BoP, a separator 119 then removes the dissolved hydrogen gas from the returned electrolyte 27.

Figures 6 - 8 show various wind-powered electrolysis arrangements known from the prior art, each making use of an offshore wind-park 11 to generate electricity required for water electrolysis.

Figure 6 illustrates a "shoreline solution" in which a large-scale electrolyser 4 and its balance of plant 4BoP are located onshore. In this approach, the wind turbines 400 of a wind farm 40 generate electricity which is transported via power cables 41 to a substation 42 located on a platform, and then exported to shore in the conventional manner, for example by means of an export power line 43 as indicated. However, the unavoidable losses associated with transport of electrical power from the wind turbines 400 to the substation 42 and from the substation 42 to shore, particularly if the wind farm is a long distance from the onshore electrolyser, means that this configuration can be very inefficient.

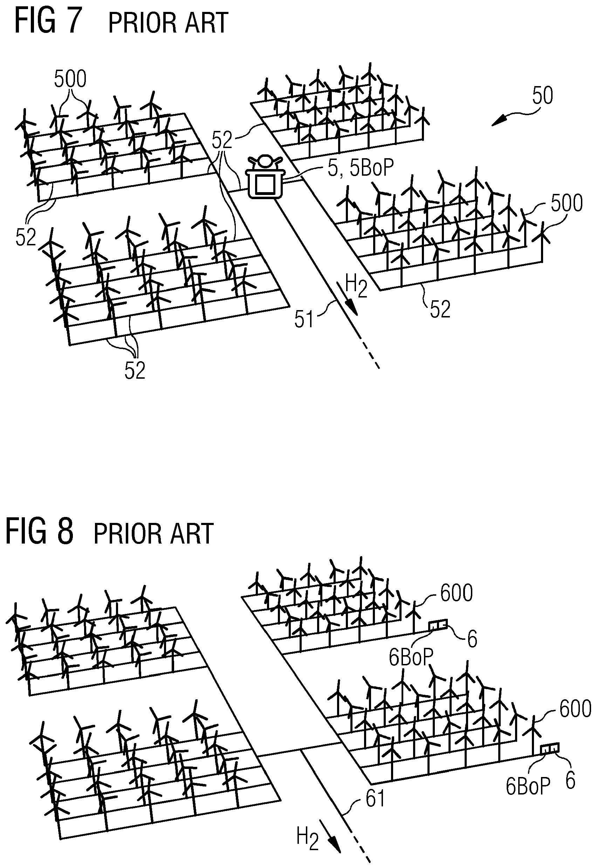

Figure 7 shows a "central solution" in which a large-scale electrolyser 5 and its balance of plant 5BoP are located offshore and in physical proximity to a wind park 50, for example on a central platform within the wind park 50, and hydrogen is brought to shore via pipeline 51. In such a configuration, each wind turbine 500 generates electricity which is transported via power cables 52 to a substation at the central platform. The drawback of this type of configuration is that, even though the power is transported over a shorter distance than in Figure 4 above, the cable losses and transformer losses remain significant.

Furthermore, placement of a water electrolyser and its balance of plant in close proximity to an electrical transformer may only be possible if strict safety requirements are fulfilled, so that the costs of constructing such a platform can be significant. The safety requirements ensure that the explosive oxygen, i.e. the waste product of water electrolysis, is kept apart from any electrical component that might overheat or generate sparks. An alternative would be to install the water electrolyser and its balance of plant on one central platform, and to provide the transformer and park controller on a separate platform, but such a configuration may ultimately be equally expensive.

Figure 8 shows an alternative "decentralized solution" in which each wind turbine 600 of a wind park 60 could be equipped with a small-scale electrolyser 6 along with its own suitably scaled balance of plant 6BoP. In this approach, each wind turbine 600 drives a local electrolyser 6 directly, so that cable losses are not an issue. However, each electrolyser 6 requires at least its own water purifier system, backup power supply, nitrogen supply, instrument air supply, hydrogen compressor and offtake interface, etc. A hydrogen export pipeline must be provided for each wind turbine installation, so that hydrogen from the electrolysers 6 can be conveyed to an export pipeline 61 for transport to a landfall facility.

The inventive approach, as described in Figures 1 - 3 above, presents a favourable configuration that exploits the benefits of the other three types of configuration explained in Figures 4 - 6 while avoiding their drawbacks, thus providing an economical and efficient way of using wind power to drive water electrolysis.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A wind-powered electrolysis arrangement (1) comprising
- a plurality of wind turbines (100) of an offshore wind park (10); and
- a distributed electrolyser plant (11) comprising a plurality of electrolysers (110), wherein each electrolyser (110) is arranged on a wind turbine platform (100P) ;
- a balance of plant (11BoP) of the distributed electrolyser plant (11), installed on a main platform (10P) in the wind park (10); and
- a plurality of product pipelines (12), wherein each product pipeline (12) is arranged to convey a number of products (20, 21, 22, 23, 24, 25) between the balance of plant (11BoP) and a distributed electrolyser (110).

2. A wind-powered electrolysis arrangement according to the preceding claim, wherein the balance of plant (11BoP) comprises at least a water purifier system (111) for generating a supply of purified water for the distributed electrolyser plant (11), and a hydrogen offtake interface (115) for collecting hydrogen from the distributed electrolyser plant (11).

3. A wind-powered electrolysis arrangement according to any of the preceding claims, comprising
- a number of product pipelines (12), each extending between two wind turbine platforms (100P);
- a number of product pipelines (12), each extending from a wind turbine platform (100P) to a main platform (10).

4. A wind-powered electrolysis arrangement according to the preceding claim, wherein the electrolysers (110) of the distributed electrolyser plant (11) are configured to perform proton exchange membrane electrolysis, and wherein a product pipeline (12) encloses
- a purified water pipe (121) arranged to convey purified water (21) from the balance of plant (11BoP) to a distributed electrolyser (110); and
- a hydrogen pipe (125) arranged to convey hydrogen (25) from that distributed electrolyser (110) to the balance of plant (11BoP).

5. A wind-powered electrolysis arrangement according to the preceding claim, wherein the balance of plant (11BoP) further comprises a nitrogen supply (113) and/or an instrument air supply (114).

6. A wind-powered electrolysis arrangement according to any of the preceding claims, wherein a wind turbine (100) is equipped with a water polishing unit (107) for its electrolyser (110).

7. A wind-powered electrolysis arrangement according to any of claims 1 to 3, wherein the electrolysers (110) of the distributed electrolyser plant (11) are configured to perform alkaline water electrolysis, and wherein a product pipeline (12) encloses
- an outgoing electrolyte pipe (126) arranged to convey an outgoing electrolyte (26) from the balance of plant (11BoP) to a distributed electrolyser (110); and
- a return electrolyte pipe (127) arranged to convey a a return electrolyte (27) from that distributed electrolyser (110) to the balance of plant (11BoP).

8. A wind-powered electrolysis arrangement according to the preceding claim, wherein the balance of plant (11BoP) further comprises a separator for removing gaseous hydrogen from the return electrolyte (27).

9. A wind-powered electrolysis arrangement according to any of the preceding claims, wherein the balance of plant (11BoP) is installed on a main platform (10P) located centrally in the wind park (10).

10. A wind-powered electrolysis arrangement according to any of the preceding claims, comprising a hydrogen export pipeline (15) extending from a main platform (10P) to a further facility.

11. A method of operating a wind-powered electrolysis arrangement (1) according to any of claims 1 to 10, which method comprises the steps of
- operating the balance of plant (11BoP) to generate products (21, 23, 24; 26) required by the electrolysers (110) of the distributed electrolyser plant (11);
- conveying the required products (21, 23, 24; 26) through the product pipelines (12) to the electrolysers (110);
- operating an electrolysers (110) using electrical power generated by its respective wind turbine (100); and
- conveying hydrogen (25; 27) from the electrolysers (110) through the product pipelines (12) to the main platform (10P) .

12. A method according to the preceding method claim, comprising a step of
- collecting hydrogen (25) produced by PEM electrolysis; or
- separating gaseous hydrogen from the return electrolyte (27) produced by alkaline water electrolysis at the main platform (10P) for export to a further facility.

13. A method according to any of the preceding method claims, comprising a step of operating the electrolyser (110) of a wind turbine (100) using electrical energy (22) generated by one or more other wind turbines (100).

14. A method according to the preceding claim, comprising a step of operating the electrolyser (110) of a downstream wind turbine (100) using electrical energy (22) generated by one or more upstream wind turbines (100).

15. A method according to any of the preceding method claims, comprising a step of operating a water purifier system (111) of the balance of plant (11BoP) to provide purified water (21) to each electrolyser (110) of a PEM electrolysis plant (11); or to provide purified water (21) to the electrolyte mixing unit (118) of an alkaline water electrolysis plant (11) .
